# EUROPÄISCHE PATENTANMELDUNG

(11) **EP 0 522 247 A1**
(43) Veröffentlichungstag der Anmeldung: **13.01.1993**
(21) Anmeldenummer: 92107108.0
(22) Anmeldetag: 25.04.1992
(51) Int. Cl.: C03B 23/047, C03B 23/07, G01B 11/02

(54) **Verfahren zum Herstellen eines Rohres aus amorphem Werkstoff**

(30) Priorität: 29.06.1991 DE 4121611
(71) Anmelder: Heraeus Quarzglas GmbH, D-63405 Hanau (DE)
(72) Erfinder: Reimann, Klaus, W-6458 Rodenbach 1 (DE); Leber, Helmut, Dr., W-6450 Hanau (DE)
(74) Vertreter: Kühn, Hans-Christian

(57) **Zusammenfassung**

Es wird ein Verfahren zum Herstellen eines Rohres (6) aus amorphem, insbesondere glasigen Werkstoff beschrieben, bei dem ein Hohlzylinder (1) aus diesem Werkstoff kontinuierlich einem Formerwerkzeug (11,12) zugeführt, unter Innen-Überdruck gegen das Formwerkzeug (11,12) geblasen und um seine Längsachse rotierend, kontinuierlich abgezogen wird, wobei sich während des Umformens vor dem Formwerkzeug (11,12) eine Umfangs-Wulst (20) ausbildet. Um bei einem derartigen Verfahren eine regelungstechnische Erfassung des Umformprozesses zu ermöglichen und auftretende Rohr-Wanddickenschwankungen zu minimieren wird die Höhe (H) des Umfangs-Wulstes (20) mittels einer Kamera (21) erfaßt und die Abweichungen von einer Sollhöhe in elektrische Regelsignale umgewandelt, mit denen die Höhe des Innen-Überdrucks, die Zuführgeschwindigkeit des Hohlzylinders (1), die Abziehgeschwindigkeit des Rohres (6) und/oder die Temperatur im erhitzten Bereich (S) eingestellt werden.

## Beschreibung

Die Erfindung betrifft ein Verfahren zum Herstellen eines Rohres aus amorphem, insbesondere glasigem Werkstoff, bei dem ein in einem Ofen erhitzter Bereich eines Hohlzylinders aus diesem Werkstoff kontinuierlich und um seine Längsachse rotierend einem Formwerkzeug, das aus wenigstens zwei Umformbacken besteht, die Teilbereiche des Umfangs des Hohlzylinders abdecken, zugeführt, unter Innen-Überdruck der Bereich gegen die Umformbacken geblasen und das Rohr vom Formwerkzeug, um seine Längsachse rotierend, kontinuierlich abgezogen wird, wobei sich während des Umformens in Zuführrichtung des Hohlzylinders gesehen vor dem Formwerkzeug ein Umfangs-Wulst bildet. Ein derartiges Verfahren ist aus der DE-PS 24 30 428 bekannt. Darin wird die Kalibrierung des Außendurchmessers von Quarzglas- oder Quarzgutrohren beschrieben. Der hohlzylindrische Rohling wird dabei kontinuierlich und unter Rotation durch ein Heizrohr geschoben, in dem mit radialem Abstand von der Rohrachse wassergekühlte Graphitplatten angeordnet sind. Durch Überdruck innerhalb des Hohlzylinders wird die Hohlzylinderoberfläche gegen die Graphitplatten geblasen, wobei der radiale Abstand der Graphitplatten von der Rohrachse den resultierenden Rohr-Außendurchmesser bestimmt. Um die Qualität der Rohr-Oberfläche durch das Anpressen an das Formwerkzeug möglichst wenig zu beeinträchtigen, sollte der Rohling im Idealfall zwischen den Graphitplatten tangierend berührend hindurchgeführt werden. Im Verlauf eines Fertigungsprozesses können die idealen Prozeßparameter aufgrund unvermeidlicher Homogenitätsschwankungen des Rohlingmaterials oder Geometrieänderungen von Rohling und abgezogenem Rohr jedoch variieren, so daß in der Praxis im Hinblick auf eine exakte Rohr-Außendurchmesserkalibrierung, eine verminderte Oberflächenqualität in Kauf genommen wird und die Prozeßparameter so eingestellt werden, daß sich, in Zuführrichtung des Rohlings gesehen vor den Graphitplatten Quarzglas aufstaut, wobei sich ein Umfangs-Wulst am Rohling ausbildet. Die sich während einer Wulstzunahme vor den Graphitplatten aufstauende Glasmasse vermindert den voreingestellten Massendurchsatz und führt zu einer Vergrößerung des Innendurchmessers des gezogenen Rohres. Umgekehrt resultiert die bei einem Abbau von Wulstmaterial zusätzlich abgezogene Glasmasse in einer Verminderung des Rohr-Innendurchmessers. Dies führt bei dem bekannten Verfahren zu Rohr-Wanddickenschwankungen von ca. +/- 20%.

Der Erfindung liegt die Aufgabe zugrunde, eine regelungstechnische Erfassung des Umformprozesses bei dem eingangs beschriebenen Verfahren zu ermöglichen und die auftretenden Rohr-Wanddickenschwankungen zu minimieren.

Gelöst wird die Aufgabe für ein Verfahren der eingangs beschriebenen Art erfindungsgemäß dadurch, daß die Höhe des Umfangs-Wulstes optisch erfaßt und die Abweichungen von einer Sollhöhe in elektrische Regelsignale umgewandelt werden, mit denen der Innen-Überdruck, die Zuführgeschwindigkeit des Hohlzylinders, die Abziehgeschwindigkeit des Rohres und/oder die Temperatur im erhitzten Bereich eingestellt werden. Dadurch, daß die Wulsthöhe optisch erfaßt wird, ist es mittels Kamera nachgeschalteten Bilddatenverarbeitung möglich, die Abweichung der gemessenen Wulsthöhe von einer vorgegebenen Sollhöhe zu erfassen und daraus die Stellgröße für einen Prozeßparameter zu ermitteln. Aufgrund der kurzen Tot- und Ausgleichszeiten der Regelstrecke bei Änderungen des Überdrucks im Hohlzylinder hat sich diese Größe als besonders vorteilhafter Regelparameter erwiesen. Wegen der hohen Ansprechempfindlichkeit und genauen Regelbarkeit kommerziell erhältlicher Druckregelventile läßt sich mit diesen Komponenten ein Regelkreis realisieren, der auf geringste Änderungen der Soll-Wulsthöhe unmittelbar und empfindlich reagiert. Die Schwankungen des Rohr-Innendurchmessers können damit deutlich minimiert werden. Die kontinuierliche, optische Überwachung der Wulsthöhe erlaubt es, die Soll-Wulsthöhe niedrig und dadurch die Beeinträchtigung der Oberflächenqualität des Rohres durch das Anpressen an das Formwerkzeug so gering wie möglich zu halten.

Bei der Herstellung eines Rohres mit einem Außendurchmesser, der größer ist als der Außendurchmesser des Hohlzylinders, läßt sich der Wulst vorteilhaft durch eine, außerhalb des Ofens, auf der Seite des abgezogenen Rohres angeordnete Kamera, die in Richtung der Rohr-Längsachse zwischen zwei Umformbacken auf den Wulst gerichtet wird, der über den Außenumfang des Rohres hervorsteht, aufzeichnen. Der Wulst hebt sich dabei als hell reflektierender Ring gegenüber der annähernd parallel zur Kamera-Achse verlaufenden Oberfläche des Hohlzylinders bzw. des Rohres ab.

Die Regelempfindlichkeit wird dadurch vorteilhafterweise erhöht, daß mittels der Kamera ein vergrößertes Abbild des Umfangs-Wulstes erzeugt und der nachfolgenden Bilddatenverarbeitung zugeführt wird.

Zweckmäßig wird das von der Kamera erfaßte Abbild des Wulstes auf einem Monitor dargestellt. Damit ist eine visuelle Kontrolle von der Kamera übertragenen Bildinformationen möglich.

Es hat sich bewährt, den Überdruck im Hohlzylinder gegenüber dem von außen auf ihn einwirkenden Druck, auf einen Wert zwischen 0,1 mbar und 30 mbar voreinzustellen und zur Regelung der den Innen-Überdruck erzeugenden Gasmenge in die Gaszuführleitung zum Hohlzylinder ein elektrisch regelbares Gasdurchflußregelgerät einzubauen, das von den Regelsignalen, die durch die Abweichungen der Wulsthöhe von der Soll-Wulsthöhe erzeugt werden, angesteuert wird. Hierdurch wird eine rasche Einstellung des Soll-Überdruckwertes mit kommerziell erhältlichen, elektrisch regelbaren Gasdurchflußregelgeräten kostengünstig ermöglicht.

Die Soll-Wulsthöhe wird vorteilhafterweise auf einen Wert zwischen 0,1 mm und 1,2 mm eingestellt. Damit kann die Wulsthöhe mit ausreichender Genauigkeit gemessen werden, ohne daß die Qualität der Rohr-Oberfläche übermäßig leidet.

Aufgrund seiner chemischen Beständigkeit in Gegenwart von Quarzglas bei hohen Temperaturen, hat es sich als vorteilhaft erwiesen, bei der Herstellung von Quarzglas-Rohren Sauerstoff zur Einstellung des Überdrucks zu verwenden. Die Bildung giftiger Abgase und Verunreinigungen der Rohr-Innenseite können damit vermieden werden.

Ein Ausführungsbeispiel der Erfindung ist in der Zeichnung dargestellt und wird nachstehend näher erläutert. In der Zeichnung zeigt
- Figur 1: eine schematische Darstellung, teilweise im Schnitt, einer Vorrichtung zur Durchführung des erfindungsgemäßen Verfahrens und
- Figur 2: eine vergrößerte Ansicht des Ofenbereiches der in Figur 1 dargestellten Vorrichtung mit Blick in Richtung des Pfeiles A.
- Figur 3: graphische Darstellung von Meßwerten der Wandstärke eines umgeformten Rohres über die Rohrlänge.

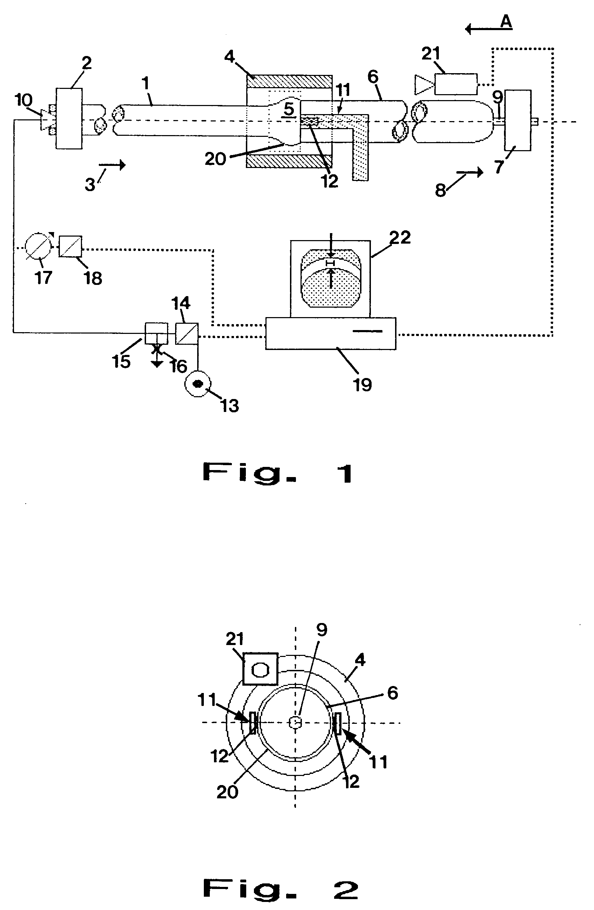

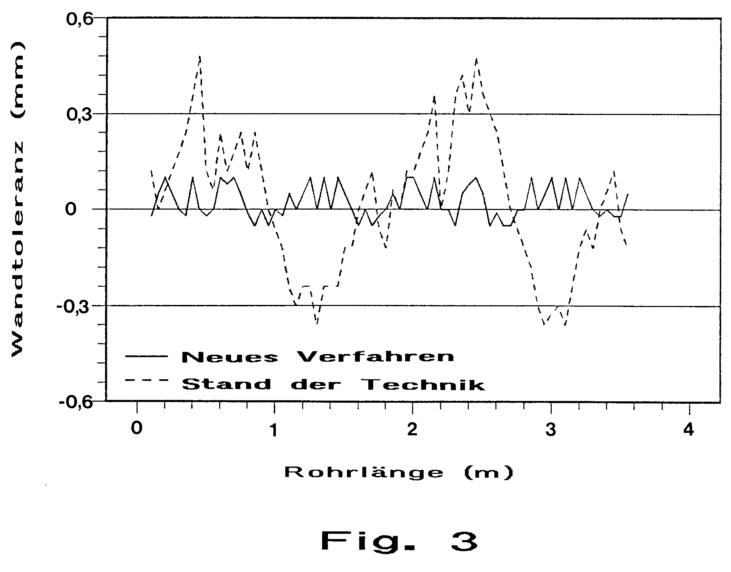

In der in Figur 1 gezeigten Darstellung ist die Bezugsziffer 1 einem Hohlzylinder aus Quarzglas zugeordnet, der mittels einer als Blockschema dargestellten Vorschubeinrichtung 2 kontinuierlich, um seine Längsachse rotierend, in Richtung des Pfeiles 3 mit einer Zuführgeschwindigkeit von 3,8 cm/min in einen Widerstandsofen 4 geschoben wird, der den Hohlzylinder 1 ringförmig umgibt. Durch eine Temperatur von ca. 2100°C wird die Viskosität des Quarzglases in einem Erweichungs-Bereich, der mit einer gestrichelten Linie andeutet und mit der Bezugsziffer 5 gekennzeichnet ist, soweit erniedrigt, daß der Hohlzylinder 1 zu einem Rohr 6 ausgezogen werden kann. Zum Ausziehen wird eine als Blockschema dargestellte Zieheinrichtung 7 verwendet, die das Rohr 6 um seine Längsachse drehend mit einer Abziehgeschwindigkeit von 24,7 cm/min in Richtung des Pfeiles 8 zieht. Die freie Stirnseite des Rohres 6, das einen Außendurchmesser von 140 mm und eine Wanddicke von 3 mm aufweist, ist mit einem Abzugsstab 9 aus Quarzglas gasdicht verschmolzen. Der Quarzglas-Hohlzylinder 1, der einen Außendurchmesser von 120 mm und einen Innendurchmesser von 60 mm aufweist, ist an seiner freien Stirnseite mit einer gasdichten Drehdurchführung 10 verschlossen. In den Ofen 4 ragt ein Formwerkzeug, das zwei wassergekühlte Formbacken 11 aufweist, die im Erhitzungs-Bereich 5 mit Graphitzungen 12 versehen sind, gegen die das Rohr 6 aufgeblasen wird. Mittels eines Druckminderers 13 wird hierzu ein konstanter Sauerstoffvordruck von 3 bar auf einen elektrisch einstellbaren Durchflußregler 14 angelegt. Der Durchflußregler 14 wird auf einen Sauerstoff-Durchfluß von 15 Litern pro Minute voreingestellt. Über einen offenen Beipaß 15, der eine Lochblende 16 mit einer Querschnittsfläche von 10 mm² aufweist, wird ein Sauerstoff-Gasstrom durch die Drehdurchführung 10 in den rotierenden Quarzglas-Hohlzylinder 1 eingeleitet. Der zum Aufblasen des Rohres 6 im Erweichungs-Bereichs 5 erforderliche Innen-Überdruck wird hierdurch auf 10 mbar voreingestellt. Der innerhalb der Regelstrecke anliegende Druck wird vom Druckmeßgerät 17 angezeigt und über den Analog-Digital-Wandler 18 als digitale Information einem Rechner 19 zugeführt, der den Durchflußregler 14 kontrolliert. Über diesen Regelkreis wird der aktuelle Sollwert des Innen-Überdrucks eingestellt und reguliert. Durch den Innen-Überdruck wird die niedrig-viskose Masse des Quarzglas-Hohlzylinders 1 im Erweichungs-Bereich 5 gegen die feststehenden Graphitzungen 12 auf den voreingestellten Durchmesser von 140 mm geblasen. Dabei bildet sich vor den Graphitzungen 12 ein Wulst 20, der über den Außendurchmesser des Quarzglas-Rohres 6 hinausragt. Eine hochauflösende Kamera 21 ist um 45° versetzt zur Rohr-Längsachse über dem Rohr 1 so angeordnet, daß sie einen Ausschnitt des Wulstes 20 mit zwanzigfacher Vergrößerung aufzeichnet. Aufgrund der Temperaturstrahlung des Widerstandsofens 4 und das durch die hohe Temperatur hervorgerufene Eigenleuchten des Wulstes 20 hebt sich dieser als helle, umlaufende Ringzone gegenüber der übrigen Rohroberfläche ab. Das von der Kamera 21 erfaßte Abbild des Wulstes wird als digitale Information auf den Rechner 19 übertragen und auf einem Monitor 22 bildlich dargestellt. Dabei sind Schwankungen der Wulsthöhe im Bereich um 10% der Soll-Wulsthöhe noch auflösbar. Mit einem Bilddatenverarbeitungsprogramm, das parallel zur Regelung des Überdrucks im Rechner 19 abgearbeitet wird, wird die gemessene Wulsthöhe, in Figur 1 mit "H" gekennzeichnet, ausgewertet und mit der Soll-Wulsthöhe, die 0,4 mm beträgt, verglichen. Entsprechend den Abweichungen von der Soll-Wulsthöhe ermittelt der Rechner 19 einen neuen Sollwert für den Innen-Überdruck im Druck-Regelkreis und gibt ein entsprechendes Signal an den Durchflußregler 14, der den Sauerstoffdurchfluß und damit den Überdruck einstellt. Aus Figur 2 ist die um etwa 45° zur Rohr-Längsachse versetzte Anordnung der Kamera 21 über dem Rohr 6 ersichtlich. Die sich gegenüberliegenden Formbacken 11 des Formwerkzeuges sind auf gleicher Höhe mit der Rohr-Längsachse angeordnet. Das Rohr 6 befindet sich zentrisch innerhalb des ringförmig ausgebildeten Widerstandsofens 4 und wird mittels des Abzugsstabes 9 in Richtung senkrecht zur Blattebene abgezogen. Durch das Aufblasen des Hohlzylinders 1 (Figur 1) innerhalb des Widerstandsofens 4 bildet sich vor den Graphit-Zungen 12 der umlaufende Wulst 20 aus, dessen Höhe von der Kamera 21 vergrößert erfaßt wird und zur Regelung der Verfahrensparameter verwendet wird.

In Figur 3 ist der Verlauf der Wandstärkeschwankungen eines Rohres mit einem Außendurchmesser von 140 mm und einer Soll-Wandstärke von 3 mm über die Rohrlänge dargestellt. Dabei ist der mit durchgezogener Linie gezeichnete Verlauf der Wandstärke eines nach dem erfindungsgemäßen Verfahren hergestellten Rohres und der mit gestrichelter Linie gezeichnete Verlauf der Wandstärke eines nach dem Stand der Technik hergestellten Rohres zugeordnet. Es ist ersichtlich, daß aufgrund der erfindungsgemäßen regelungstechnischen Erfassung des Umformprozesses die Schwankungen der Wandstärke des Rohres gegenüber dem Herstellverfahren nach dem Stand der Technik wesentlich reduziert und die Toleranzen in einem Bereich von deutlich weniger als 10 % der nominalen Wandstärke gehalten werden können.

## Patentansprüche

1. Verfahren zum Herstellen eines Rohres aus amorphem, insbesondere glasigem Werkstoff, bei dem ein in einem Ofen erhitzter Bereich eines Hohlzylinders aus diesem Werkstoff kontinuierlich und um seine Längsachse rotierend einem Formwerkzeug, das aus wenigstens zwei Umformbacken besteht, die Teilbereiche des Umfangs des Hohlzylinders abdecken, zugeführt, unter Innen-Überdruck der Bereich gegen die Umformbacken geblasen und das Rohr vom Formwerkzeug, um seine Längsachse rotierend, kontinuierlich abgezogen wird, wobei sich während des Umformens in Zuführrichtung des Hohlzylinders gesehen vor dem Formwerkzeug ein Umfangs-Wulst bildet, dadurch gekennzeichnet, daß die Höhe des Umfangs-Wulstes (20) optisch erfaßt und die Abweichungen von einer Sollhöhe in elektrische Regelsignale umgewandelt werden, mit denen die Höhe des Innen-Überdrucks, die Zuführgeschwindigkeit des Hohlzylinders (1), die Abziehgeschwindigkeit des Rohres (6) und/oder die Temperatur im erhitzten Bereich (5) eingestellt werden.

2. Verfahren nach Anspruch 1, dadurch gekennzeichnet, daß bei Herstellung eines Rohres (6) mit einem Außendurchmesser, der größer ist als der Außendurchmesser des Hohlzylinders (1), eine Kamera (21) außerhalb des Ofens, auf der Seite des abgezogenen Rohres so angeordnet wird, daß sie in Richtung der Rohr-Längsachse zwischen zwei Umformbacken (11) auf den Wulst (20) gerichtet wird, der über den Außenumfang des Rohres (6) hervorsteht.

3. Verfahren nach Anspruch 2, dadurch gekennzeichnet, daß mit der Ka- mera (21) ein vergrößertes Abbild des Umfangs-Wulstes (20) erzeugt wird.

4. Verfahren nach einem der Ansprüche 2 oder 3, dadurch gekennzeichnet, daß das von der Kamera (21) erfaßte Abbild des Wulstes (20) auf einem Monitor (22) dargestellt wird.

5. Verfahren nach einem der Ansprüche 1 bis 4, dadurch gekennzeichnet, daß der Innen-Überdruck auf einen Wert zwischen 0,1 mbar und 30 mbar zur Erreichung einer vorgegebenen Sollhöhe des Wulstes (20) voreingestellt wird.

6. Verfahren nach einem der Ansprüche 1 bis 5, dadurch gekennzeichnet, daß zur Regelung der den Innen-Überdruck erzeugenden Gasmenge in die Gas-Zufuhrleitung zum Hohlzylinder (1) ein elektrisch regelbares Gasdurchflußregelgerät (14) eingebaut wird, das von den Regelsignalen, die durch die Abweichungen der Wulsthöhe (H) von der Soll-Wulsthöhe erzeugt werden, angesteuert wird.

7. Verfahren nach einem der Ansprüche 1 bis 6, dadurch gekennzeichnet, daß die Soll-Wulsthöhe auf einen Wert zwischen 0,1 mm und 1,2 mm eingestellt wird.

8. Verfahren nach einem der Ansprüche 1 bis 7, dadurch gekennzeichnet, daß zur Herstellung von Rohren aus Quarzglas, Sauerstoff zur Erzeugung des Innen-Überdrucks verwendet wird.
